# EUROPÄISCHE PATENTSCHRIFT

(11) **EP 3 270 021 B1**
(45) Veröffentlichungstag und Bekanntmachung des Hinweises auf die Patenterteilung: **16.10.2019**
(21) Anmeldenummer: 17173405.6
(22) Anmeldetag: 30.05.2017
(51) Int. Cl.: F16K 31/06

(54) **ELEKTROMAGNETISCHER VENTILANTRIEB, VERFAHREN ZU SEINER HERSTELLUNG UND DAMIT AUSGESTATTETES MAGNETVENTIL**
ELECTROMAGNETIC VALVE DRIVE, METHOD FOR PRODUCING THE SAME, AND SOLENOID VALVE EQUIPPED WITH THE SAME
MÉCANISME DE DISTRIBUTION ÉLECTROMAGNÉTIQUE, SON PROCÉDÉ DE FABRICATION ET ÉLECTROVANNE EN ÉTANT ÉQUIPÉE

(30) Priorität: 15.07.2016 DE 102016212950
(43) Veröffentlichungstag der Anmeldung: 17.01.2018
(73) Patentinhaber: FESTO AG & Co. KG, 73734 Esslingen (DE)
(72) Erfinder: Lenz, Markus, 71384 Weinstadt (DE); Blassmann, Lars, 73732 Esslingen (DE); Gerhartz, Jürgen, 73207 Plochingen (DE); Dolderer, Frank, 73557 Mutlangen (DE)
(74) Vertreter: Patentanwälte Magenbauer & Kollegen Partnerschaft mbB

(56) Entgegenhaltungen:
- EP-A1- 3 018 392
- DE-A1- 1 514 282
- US-A- 5 709 370

## Beschreibung

Die Erfindung betrifft einen elektromagnetischen Ventilantrieb, mit einer mindestens eine bestrombare Spule tragenden ferromagnetischen Jochstruktur, die zwei zueinander beabstandete und magnetisch leitend miteinander verbundene seitliche Jochkörper enthält, mit einer den Abstand zwischen den beiden seitlichen Jochkörpern überbrückenden, als Baueinheit konzipierten Polplatteneinheit, die zwei mit jeweils einem der seitlichen Jochkörper magnetisch leitend verbundene, ferromagnetische Polplatten umfasst, zwischen denen ein magnetisch nicht leitfähiges Zwischenelement angeordnet ist, und mit einem benachbart zu der Polplatteneinheit angeordneten, die beiden Polplatten überlappenden Ankerelement, das durch elektrische Ansteuerung der Spule zu einer den Abstand zur Polplatteneinheit verändernden Arbeitsbewegung antreibbar ist.

Die Erfindung betrifft ferner ein Verfahren zur Herstellung eines solchen elektromagnetischen Ventilantriebes und außerdem ein mit einem solchen elektromagnetischen Ventilantrieb ausgestattetes Magnetventil.

Aus der EP 3 018 392 A1 ist ein elektromagnetischer Ventilantrieb der vorgenannten Art bekannt, der über eine H-förmig gestaltete Jochstruktur mit zwei zueinander beabstandeten, seitlichen Jochkörpern verfügt und der eine elektrisch bestrombare Spule trägt. Durch Bestromung der Spule lässt sich ein Magnetfeld aufbauen, um ein Ankerelement zu einer Arbeitsbewegung anzutreiben, durch die ein Ventilglied betätigbar ist. Zur Optimierung des Magnetflusses weist der bekannte Ventilantrieb eine an die Jochstruktur angesetzte und durch gesonderte Befestigungsmaßnahmen daran fixierte Polplatteneinheit auf, die sich bei einer möglichen Ausführungsform aus einem einstückigen, geschlitzten Plattenkörper und einem in den Plattenkörper eingesetzten Füllelement zusammensetzt. Eine alternative Ausführungsform sieht zwei gesonderte Polplatten vor, die durch einen offenen Spalt voneinander getrennt sind und unabhängig voneinander an jeweils einem der seitlichen Jochkörper befestigt sind.

Der Erfindung liegt die Aufgabe zugrunde, eine kostengünstige Realisierung eines bei kompakten Abmessungen eine hohe Magnetkraft erzeugenden elektromagnetischen Ventilantriebes zu ermöglichen.

Zur Lösung dieser Aufgabe ist bei einem Ventilantrieb der eingangs genannten Art vorgesehen, dass die beiden Polplatten separat voneinander ausgebildet und beabstandet zueinander angeordnet sind, wobei sie zur Bildung der Polplatteneinheit ohne direkten gegenseitigen Kontakt durch das Zwischenelement fest miteinander verbunden sind.

Auf diese Weise liegt ein Ventilantrieb vor, der ein beispielsweise auf ein Ventilglied einwirkendes Ankerelement trotz kompakter Abmessungen mit einer hohen magnetischen Anzugskraft beaufschlagen kann. Dadurch, dass die beiden Polplatten separat voneinander ausgebildet und beabstandet zueinander angeordnet sind, wird ein magnetischer Kurzschluss vermieden und das durch die Spule erzeugbare Magnetfeld wird gezwungen, seinen Weg durch das benachbarte Ankerelement hindurch zu nehmen. Folglich kann sich zwischen den Polplatten und dem Ankerelement ein hoher magnetischer Fluss ausbilden, aus dem eine hohe Anzugskraft resultiert, die die Möglichkeit bietet, bei kompakten Abmessungen des Ventilantriebes hohe Fluidkräfte zu beherrschen. Der zwischen den beiden Polplatten befindliche Abstand ist allerdings nicht offen, sondern durch ein magnetisch nicht leitfähiges Zwischenelement ausgefüllt, das mit den beiden Polplatten fest verbunden ist, so dass sich ein als Baueinheit auftretender, die Polplatteneinheit bildender Verbundkörper einstellt. Dieser Verbundkörper ist bei der Montage des Ventilantriebes einfach handhabbar und leicht an der gewünschten Stelle positionierbar. Er bietet außerdem die Möglichkeit, den Bereich des Ankerelementes vom entgegengesetzten Bereich der Jochstruktur abzuschotten, so dass letztere durch das von einem mit dem Ventilantrieb ausgestatteten Ventil zu steuernde Fluid nicht beeinträchtigt wird. Ein weiterer Vorteil der Polplatteneinheit besteht darin, dass sie bei Bedarf zur Ausstattung unterschiedlicher Bauformen von Elektromagneten nutzbar ist, also beispielsweise sowohl für Elektromagneten mit einer H-förmigen Jochstruktur oder für Elektromagneten mit einer U-förmigen Jochstruktur. Auch eignet sich die einheitlich handhabbare Polplatteneinheit zur Kombination mit unterschiedlichen Ankersystemen, die sich insbesondere in der Ausgestaltung ihrer Ankerelemente voneinander unterscheiden. Das magnetisch nicht leitende Zwischenelement hat entweder überhaupt keine magnetische Leitfähigkeit oder eine nur sehr geringe und im Vergleich zu den beiden Polplatten sehr schwache magnetische Leitfähigkeit.

Vorteilhafte Weiterbildungen der Erfindung gehen aus den Unteransprüchen hervor.

Die beiden Polplatten sind zweckmäßigerweise als bezüglich der Jochstruktur separate Komponenten ausgebildet und jeweils an eine Abschlussfläche eines der Jochkörper angesetzt. Eine unmittelbare Befestigung zwischen den Polplatten und dem Jochkörper ist dabei zweckmäßigerweise nicht vorhanden, die Polplatten sind vorzugsweise durch entsprechende Mittel des Ventilantriebes rein kraftschlüssig mit den Abschlussflächen der beiden Jochkörper verspannt. Dadurch ist zum einen eine von der Jochstruktur unabhängige Herstellung der Polplatteneinheit möglich und andererseits wird das Werkstoffgefüge der Jochkörper und der Polplatten durch die gegenseitige Befestigung dieser Komponenten nicht beeinträchtigt.

In einer bevorzugten Ausgestaltung des Ventilantriebes ist die ferromagnetische Jochstruktur H-förmig gestaltet, wobei die beiden seitlichen Jochkörper plattenförmig ausgebildet und durch einen sich zwischen ihnen erstreckenden ferromagnetischen Jochkern der Jochstruktur magnetisch leitend miteinander verbunden sind. Die bestrombare Spule sitzt auf dem Jochkern, entweder unmittelbar oder unter Zwischenfügung eines isolierend wirkenden Spulenträgers. In einem Bereich ihres Außenumfanges ist die Spule von der Polplatteneinheit flankiert, die sich in einem äußeren Randbereich zwischen den beiden seitlich angeordneten plattenförmigen Jochkörpern erstreckt. Jeder Jochkörper kann einstückig oder mehrteilig ausgeführt sein. Bei einer mehrteiligen Ausführungsform sind die seitlichen Jochkörper zweckmäßigerweise mit einer Durchbrechung versehen, in die der Jochkern eingesteckt und insbesondere eingepresst ist. Die beiden seitlichen Jochkörper bestehen ebenso wie der Jochkern und das durch das Magnetfeld betätigbare Ankerelement aus einem ferromagnetischen Material, insbesondere aus einem ferromagnetische Eigenschaften besitzenden Stahl.

Eine alternative Ausführungsform der Jochstruktur ist U-förmig gestaltet und hat zwei die seitlichen Jochkörper bildende Schenkel, von denen mindestens einer eine Spule trägt.

Das ferromagnetische Ankerelement ist zweckmäßigerweise plattenförmig ausgebildet, wobei sich seine Plattenebene bevorzugt zumindest im Wesentlichen parallel zur Plattenebene der Polplatteneinheit erstreckt. Auf diese Weise ist die Grundfläche der zwischen dem Ankerelement und den Polflächen der Polplatten definierten Arbeitsluftspalte mit besonders großen Abmessungen realisierbar.

Bei der Arbeitsbewegung des Ankerelementes handelt es sich zweckmäßigerweise um eine quer zur Plattenebene der Polplatteneinheit orientierte translatorische Bewegung. In diesem Zusammenhang ist der Ventilantrieb insbesondere so ausgebildet, dass das Ankerelement eine von den beiden Polplatten vollständig abgehobene Stellung einnehmen kann, in der zwei Arbeitsluftspalte vorliegen, und zwar ein Arbeitsluftspalt zwischen dem Ankerelement und jeder der beiden Polplatten.

Die feste Verbindung zwischen dem Zwischenelement und jeder der beiden Polplatten ist vorzugsweise derart fluiddicht ausgebildet, dass sie bei den im Betrieb eines mit dem Ventilantrieb ausgestatteten Ventils auftretenden Fluiddrücken fluidundurchlässig ist. Auf diese Weise ergibt sich neben der magnetischen Trennung der beiden ferromagnetischen Polplatten gleichzeitig eine Fluiddruckdichtigkeit senkrecht zur Polplattenebene.

Zweckmäßigerweise ist ein Sockelkörper vorhanden, der die Jochstruktur trägt. In dem Sockelkörper sind zweckmäßigerweise mehrere Fluidkanäle ausgebildet, deren Verbindung untereinander mittels eines Ventilgliedes steuerbar ist, das mit Hilfe des Ankerelementes beweglich ist. Das Ventilglied kann ein bezüglich des Ankerelementes separates Bauteil sein, das mit dem Ankerelement bewegungsgekoppelt ist. Alternativ besteht auch die vorteilhafte Möglichkeit, das Ankerelement unmittelbar als Ventilglied zu nutzen bzw. auszubilden.

Vorzugsweise handelt es sich bei der Polplatteneinheit um einen durch sogenannte Plattierung erzeugten Verbundkörper, bei dem die beiden Polplatten und das Zwischenelement durch Walzbearbeitung miteinander vereinigt wurden. Daraus resultiert ein besonders inniger Materialverbund ohne Zufuhr eines gesonderten Fügewerkstoffes. Durch das Verwalzen des Materials lässt sich auch die schon angesprochene hohe Druckdichtigkeit sehr einfach realisieren. Bevorzugt werden zur Plattierung die zuvor getrennten Komponenten der Polplatteneinheit in einer Walzanlage durch hohen Walzdruck miteinander verpresst.

Eine bevorzugte Materialkombination zur Ausbildung der Polplatteneinheit sieht vor, dass die beiden Polplatten aus einem ferromagnetischen Stahl bestehen, während das Zwischenelement aus einem magnetisch nicht leitfähigen Material besteht, insbesondere aus einem magnetisch überhaupt nicht leitenden Metall wie Aluminium, Kupfer, Titan, Messing oder Bronze oder aus einem magnetisch nur sehr schwach leitenden Metall wie austenitischer Stahl. Anstatt aus einem Metall könnte das Zwischenelement beispielsweise auch aus Kunststoffmaterial bestehen.

Sowohl jede Polplatte als auch das Zwischenelement haben zweckmäßigerweise eine einstückige Struktur. Insbesondere bei den Polplatten besteht allerdings die alternative Möglichkeit zur Realisierung aus mehreren fest miteinander verbundenen Platten-Teilkörpern, die zweckmäßigerweise auch durch Plattierung miteinander vereinigt sind. Auf diese Weise lassen sich sehr einfach Polplatten mit komplexen Querschnittsformen realisieren.

Zumindest an ihrer dem Ankerelement zugewandten Plattenfläche kann die Polplatteneinheit eine die Polplatten und das dazwischen angeordneten Zwischenelement abdeckende Korrosionsschutzplatte aufweisen, die aus einem magnetisch nicht leitfähigen Material besteht und die relativ dünn ist und insbesondere dünner ist als die Polplatten und das Zwischenelement. Die Korrosionsschutzplatte ist bevorzugt folienartig dünn strukturiert. Die Korrosionsschutzplatte ist mit den anderen Komponenten der Polplatteneinheit fest verbunden, insbesondere ebenfalls durch Plattierung, wobei das dabei stattfindende Aufwalzen der Korrosionsschutzplatte bevorzugt in einem Walzprozess stattfindet, der dem sich auf die Polplatten und das Zwischenelement beziehenden Walzprozess nachgelagert ist.

Eine besonders einfache Herstellung der Polplatteneinheit ist möglich, wenn sowohl die beiden Polplatten als auch das Zwischenelement eine Quaderform haben. Die Fügeflächen zwischen dem Zwischenelement und den beiden Polplatten sind dabei allerdings relativ klein. Um die Fügeflächen und folglich die Festigkeit der Verbindung zu erhöhen, besteht beispielsweise die alternative Möglichkeit, für das Zwischenelement einen im Wesentlichen T-förmigen Querschnitt zu wählen und die Gesamtanordnung so zu treffen, dass das Zwischenelement mit einem Zentralabschnitt zwischen die beiden Polplatten eingreift und über zwei von dem Zentralabschnitt in entgegengesetzte Richtungen wegragende Schenkelabschnitte verfügt, die in das Material der benachbarten Polplatten in außen flächenbündiger Weise eingelassen sind. Die Polplatteneinheit ist dabei zweckmäßigerweise so ausgerichtet, dass ihre die beiden Schenkelabschnitte des Zwischenelementes aufweisende Plattenfläche der Jochstruktur zugewandt ist.

Eine zur Plattierung alternative Möglichkeit zur Herstellung der Polplatteneinheit besteht in der Anwendung eines ZweiKomponenten-Metallpulverspritzgießverfahrens. Dabei werden die Polplatten und das Zwischenelement jeweils pulvermetallurgisch gefertigt, indem über die erforderlichen Eigenschaften verfügendes Metallpulver durch Zusatz von thermoplastischen Kunststoffen fließfähig gemacht wird und anschließend zur Formgebung der Polplatteneinheit in geeignet gestaltete Spritzgussformen eingespritzt wird. Andere alternative Herstellungsverfahren sind beispielsweise das sogenannte Hybridschweißen, bei dem Stahl mit Kunststoff verschweißt wird, oder das Widerstandsschweißen.

Die der Erfindung zugrunde liegende Aufgabe wird bei einem Verfahren der eingangs genannten Art in vorteilhafter Weise dadurch gelöst, dass die die Polplatteneinheit bildenden Komponenten durch Plattieren mittels eines Walzvorganges miteinander verbunden werden. Bevorzugt wird das Verfahren so angewandt, dass die Polplatteneinheit durch Ablängen oder Ausstanzen eines in Meterware erzeugten Verbundstrangkörpers mit der für die Polplatteneinheit gewünschten Baulänge erzeugt wird. Aus dem Verbundstrangkörper kann auf diese Weise äußerst rationell eine beliebige Anzahl von Polplatteneinheiten hergestellt werden, deren Länge nach Bedarf wählbar ist. Der Verbundstrangkörper wird zuvor durch einen kontinuierlichen Plattierungsvorgang hergestellt, bei dem ferromagnetische Polplatten-Ausgangsstrangkörper und ein magnetisch nicht leitfähiger Zwischenelement-Ausgangskörper durch einen Walzvorgang miteinander vereinigt wurden. Der Walzvorgang kann sich aus mehreren aufeinanderfolgenden Walzphasen zusammensetzen, um den gewünschten Fügedruck allmählich aufzubauen, ohne den Werkstoff zu beschädigen.

Nach dem Walzen wird entweder der Verbundstrangkörper oder jede daraus abgelängte Polplatteneinheit zweckmäßigerweise einem Glühprozess unterzogen. Das Glühen führt zu einer festeren Verbindung der unterschiedlichen Werkstoffe sowie zur Wiederherstellung der ferromagnetischen Eigenschaften der bevorzugt aus Stahl bestehenden Jochkörper, die durch die mechanische Bearbeitung im Walzprozess eventuell negativ beeinflusst wurden.

Ein erfindungsgemäßes Magnetventil ist mit einem elektromagnetischen Ventilantrieb ausgestattet, der in dem oben beschriebenen Sinne ausgebildet ist und der zweckmäßigerweise unter Anwendung des vorgenannten Verfahrens hergestellt ist. Das Magnetventil verfügt über ein bewegliches Ventilglied, das mit dem Ankerelement des Ventilantriebes bewegungsgekoppelt ist oder das unmittelbar von dem Ankerelement gebildet ist.

Der Ventilantrieb kann als ein Einzelantrieb konzipiert sein, alternativ aber auch als ein Mehrfachantrieb, bei dem die Jochstruktur mehrfach vorhanden und mit mehreren Spulen bestückt ist.

Bei allen Ausführungsformen kann die Spule im Querschnitt betrachtet zum Beispiel kreisförmig oder reckeckförmig strukturiert sein. Entsprechendes gilt für den die Spule tragenden Bestandteil des Jochkörpers.

Nachfolgend wird die Erfindung anhand der beiliegenden Zeichnung näher erläutert. In dieser zeigen:

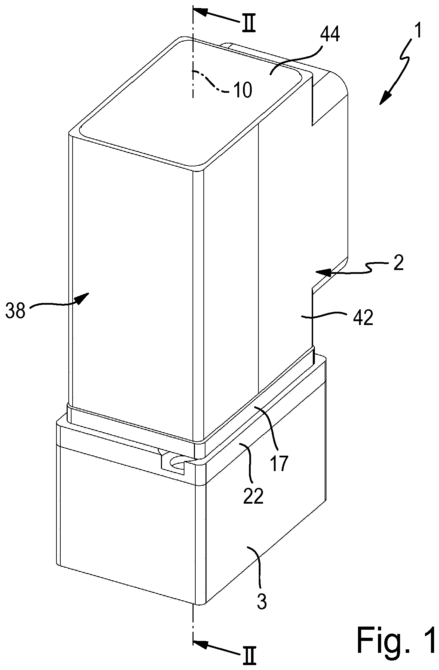

- Figur 1: eine bevorzugte Bauform eines erfindungsgemäßen Magnetventils, das mit einem erfindungsgemäßen elektromagnetischen Ventilantrieb bevorzugten Auf-baus ausgestattet ist und das insbesondere unter Anwendung des erfindungsgemäßen Verfahrens herge-stellt ist,
- Figur 2: das Magnetventil aus Figur 1 im Längsschnitt gemäß Schnittlinie II-II, wobei in einem strichpunktiert umrahmten Ausschnitt der Querschnitt einer alterna-tiv gestalteten Polplatteneinheit illustriert ist,

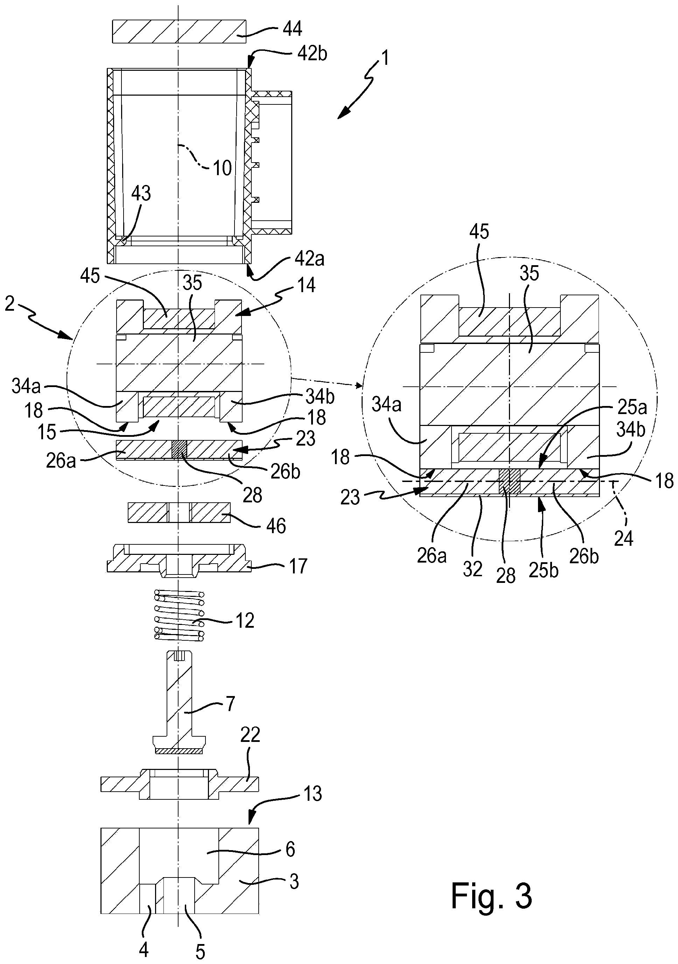

- Figur 3: einen Längsschnitt des Magnetventils der Figuren 1 und 2 in einer Explosionsdarstellung, wobei eine aus dem mit einer Spule bestückten Jochkörper und der Polplatteneinheit bestehende Baugruppe auch nochmals gesondert in einem umrahmten Ausschnitt illustriert ist, und
- Figur 4: eine isometrische Explosionsdarstellung des Magnet-ventils der Figuren 1 bis 3, wobei in einem vergrö-ßerten Ausschnitt die Komponenten der Polplatten-einheit vor ihrer Vereinigung mittels des erfin-dungsgemäßen Herstellungsverfahrens illustriert sind.

In der Zeichnung ist ein insgesamt mit Bezugsziffer 1 bezeichnetes Magnetventil illustriert, das mit einem vorteilhaft ausgestalteten elektromagnetischen Ventilantrieb 2 ausgestattet ist.

Das Magnetventil 1 verfügt über einen Sockelkörper 3, der auch ein Bestandteil des Ventilantriebes 2 sein kann und in dem mehrere Fluidkanäle 4, 5 ausgebildet sind, die jeweils einerseits zu einer Außenfläche des Sockelkörpers 3 und andererseits in eine im Innern des Sockelkörpers 3 ausgebildete Ventilkammer 6 münden.

In der Ventilkammer 6 befindet sich ein Ventilglied 7, das relativ zu dem Sockelkörper 3 eine durch einen Doppelpfeil angedeutete, hin und her gehende Umschaltbewegung 8 ausführen kann.

Im Rahmen der Umschaltbewegung 8 kann das Ventilglied 7 in einer aus der Zeichnung ersichtlichen ersten Schaltstellung positioniert werden, in der es unter Abdichtung an einem Ventilsitz 9 anliegt und dadurch eine Fluidverbindung zwischen den beiden Fluidkanälen 4, 5 unterbricht. Darüber hinaus kann das Ventilglied im Rahmen der Umschaltbewegung 8 in mindestens einer nicht weiter abgebildeten weiteren Schaltstellung positioniert werden, in der es von dem Ventilsitz 9 abgehoben ist und dadurch eine Fluidverbindung zwischen den beiden Fluidkanälen 4, 5 freigibt. Diese weiteren Schaltstellungen sind exemplarisch somit Offenstellungen, die es einem in einen der beiden Fluidkanäle 4 oder 5 eingespeisten Fluid ermöglichen, durch die Ventilkammer 6 hindurch zum anderen Fluidkanal 5 oder 4 überzuströmen.

Das Magnetventil 1 und der Ventilantrieb 2 haben eine exemplarisch eine Hochachse definierende Hauptachse 10. An einer in Achsrichtung der Hauptachse 10 orientierten Antriebsseite 13 ist der Sockelkörper 3 mit dem Ventilantrieb 2 bestückt.

Der Ventilantrieb 2 dient dazu, die Umschaltbewegung 8 des Ventilgliedes 7 hervorzurufen und das Ventilglied 7 in der jeweils gewünschten Schaltstellung zu positionieren. Die Umschaltbewegung 8 ist bevorzugt eine translatorische Bewegung, bei der es sich exemplarisch um eine Linearbewegung in der Achsrichtung der Hauptachse 10 handelt.

Zweckmäßigerweise ist der Ventilantrieb 2 unter Zwischenschaltung einer aus einer oder mehreren Adapterplatten 17, 22 bestehenden Adapterplattenanordnung an dem Sockelkörper 3 befestigt.

Bevorzugt enthält das Magnetventil 1 eine Ventilfeder 12, die in der Ventilkammer 6 zwischen dem Ventilglied 7 und der Adapterplattenanordnung 17, 22 wirksam ist und das Ventilglied 7 ständig in eine seiner Schaltstellungen, exemplarisch die Schließstellung vorspannt.

Der Ventilantrieb 2 verfügt über eine ferromagnetische Jochstruktur 14, die zwei in Achsrichtung einer zu der Hauptachse 10 rechtwinkeligen ersten Querachse 33 beabstandet zueinander angeordnetes erste und zweite seitliche Jochkörper 34a, 34b und einen sich zwischen diesen beiden seitlichen Jochkörpern 34a, 34b erstreckenden Joch-Verbindungskörper 35 aufweist. Die gesamte Jochstruktur 14 einschließlich der vorgenannten Komponenten 34a, 34b, 35 besteht aus einem ferromagnetischen Material, insbesondere aus Stahl. Der Joch-Verbindungskörper 35 verbindet die beiden seitlichen Jochkörper 34a, 34b in magnetisch leitender Weise.

Bei dem illustrierten, bevorzugten Ausführungsbeispiel ist die ferromagnetische Jochstruktur 14 H-förmig gestaltet. Die beiden seitlichen Jochkörper 34a, 34b sind dabei plattenförmig mit rechteckiger Außenkontur ausgebildet, wobei ihre Plattenebene rechtwinkelig zu der ersten Querachse 33 verläuft. Der Joch-Verbindungskörper 35 definiert einen bevorzugt stabförmigen Jochkern, der sich in der Achsrichtung der ersten Querachse 33 erstreckt und magnetisch leitend mit den beiden plattenförmigen seitlichen Jochkörpern 34a, 34b verbunden ist. Exemplarisch hat der Joch-Verbindungskörper 35 einen rechteckigen Querschnitt, er kann jedoch auch jede andere Querschnittsform haben, beispielsweise eine runde oder eine ovale Querschnittsform. Bevorzugt ist der Joch-Verbindungskörper 35 dadurch mit den seitlichen Jochkörpern 34a, 34b verbunden, dass er in Aussparungen oder Durchbrechungen der seitlichen Jochkörper 34a, 34b eingesteckt und insbesondere eingepresst ist. Er kann allerdings auch einstückig mit den seitlichen Jochkörpern 34a, 34b ausgebildet sein. Auf dem Joch-Verbindungskörper 35 sitzt koaxial eine bestrombare Spule 45. Diese Spule 45 ragt zweckmäßigerweise an keiner Stelle über den Umriss der seitlichen Jochkörper 34a, 34b hinaus.

Die Spule 45 enthält einen gewickelten Spulendraht, der mit nicht weiter illustrierten Anschlusselektroden kontaktiert ist, die zweckmäßigerweise in jeweils einem der beiden seitlichen Jochkörper 34a, 34b isoliert verankert sind. Wird an diese Anschlusselektroden eine elektrische Spannung angelegt, erfährt die Spule 45 eine Bestromung und erzeugt in bekannter Weise ein Magnetfeld, das zumindest größtenteils in der Jochstruktur 14 verläuft und durch diese Jochstruktur 14 geleitet wird.

Die Jochstruktur 14 hat eine in Achsrichtung der Hauptachse 10 orientierte Seite, die zur besseren Unterscheidung als Arbeitsseite 15 bezeichnet sei und die bei zusammengebautem Magnetventil 1 der Antriebsseite 13 des Sockelkörpers 3 zugewandt ist.

An der Arbeitsseite 15 der Jochstruktur 14 hat jeder seitliche Jochkörper 34a, 34b eine Abschlussfläche 18. Die Abschlussfläche 18 ist bevorzugt eben, wobei beide Abschlussflächen 18 in einer gemeinsamen, zu der Hauptachse 10 rechtwinkeligen Ebene liegen.

Ein wesentlicher Bestandteil des Ventilantriebes 2 ist eine Polplatteneinheit 23. Bei der Polplatteneinheit 23 handelt es sich um einen starren Verbundkörper, der sich aus mehreren fest und insbesondere auch unlösbar miteinander verbundenen Komponenten zusammensetzt. Insgesamt ist die Polplatteneinheit 23 bevorzugt plattenförmig gestaltet und hat eine im Folgenden als Plattenebene 24 bezeichnete Hauptausdehnungsebene. Die Polplatteneinheit 23 hat zwei einander entgegengesetzt orientierte, erste und zweite großflächige Außenflächen 25a, 25b, die parallel zu der Plattenebene 24 verlaufen. In Achsrichtung der Hauptachse 10 betrachtet, hat die Polplatteneinheit 23 insbesondere einen rechteckigen Umriss.

Die beispielhafte Polplatteneinheit 23 ist quaderförmig gestaltet, wobei ihre in Achsrichtung der Hauptachse 10 gemessene Höhe kleiner ist als ihre in der Achsrichtung der ersten Querachse 33 gemessene Länge und ihre in Achsrichtung einer zur ersten Querachse 33 und zur Hauptachse 10 rechtwinkeligen zweiten Querachse 36 gemessene Breite.

Bei den Komponenten der Polplatteneinheit 23 handelt es sich mindestens um zwei aus ferromagnetischem Material bestehende Polplatten 26a, 26b, die im Folgenden zur besseren Unterscheidung auch als erste Polplatte 26a und zweite Polplatte 26b bezeichnet werden, und um ein Zwischenelement 28.

Jede Polplatte 26a, 26b hat eine die Hauptausdehnungsebene der betreffenden Polplatte 26a, 26b definierende Plattenebene, die mit der Plattenebene 24 der Polplatteneinheit 23 zusammenfällt. Die beiden Polplatten 26a, 26b sind in zu der Hauptachse 10 rechtwinkeliger Richtung, insbesondere in der Achsrichtung der ersten Querachse 33, mit Abstand zueinander angeordnet, so dass sich zwischen ihnen ein durchgängiger, bevorzugt schlitzförmiger Zwischenraum 37 befindet und an keiner Stelle ein direkter Kontakt oder eine direkte Verbindung zwischen den beiden ferromagnetischen Polplatten 26a, 26b besteht. Der schlitzförmige Zwischenraum 37 ist zwischen den beiden großflächigen Außenflächen 25a, 25b und zwischen den in der Achsrichtung der zweiten Querachse 36 orientierten längsseitigen Außenflächen 27a, 27b der Polplatteneinheit 23 durchgängig.

Der Zwischenraum 37 ist allerdings nicht offen, sondern - bevorzugt vollständig - durch ein aus einem magnetisch nicht leitfähigen Material bestehendes Zwischenelement 28 ausgefüllt. Das magnetisch nicht leitende Zwischenelement 28 hat entweder überhaupt keine magnetische Leitfähigkeit oder eine nur sehr geringe und im Vergleich zu den beiden Polplatten 26a, 26b schwache magnetische Leitfähigkeit.

Das Zwischenelement 28 ist bevorzugt nicht ferromagnetisch und hat bezüglich eines magnetischen Flusses keine relevanten flussleitenden Eigenschaften. Es besteht bevorzugt aus einem über entsprechende Eigenschaften verfügenden Metall, insbesondere einem Metall aus der Gruppe Aluminium, Kupfer, Titan, Messing, Bronze und austenitischer Stahl. Das Zwischenelement 28 kann auch aus einem Kunststoffmaterial bestehen. Die ferromagnetischen Polplatten 26a, 26b bestehen vorzugsweise aus einem Stahlwerkstoff.

Das Zwischenelement 28 fungiert als Bindeglied zur mittelbaren gegenseitigen starren Verbindung der beiden Polplatten 26a, 26b und ist an den entsprechenden Berührflächen mit jeder Polplatte 26a, 26b fest und unlösbar verbunden. Mit anderen Worten sind das Zwischenelement 28 und die Polplatten 26a, 26b mit einander paarweise zugewandten Fügeflächen 55a, 55b unmittelbar an diesen Fügeflächen 55a, 55b fest miteinander verbunden.

Bei einer möglichen Ausführungsform besteht die Polplatteneinheit 23 ausschließlich aus den beiden Polplatten 26a, 26b und dem dazwischen angeordneten Zwischenelement 28. Optional kann die Polplatteneinheit 23 aber auch noch einseitig, mehrseitig oder ringsum mit einer Korrosionsschutzschicht versehen sein. Dies trifft auf das Ausführungsbeispiel zu, das als Korrosionsschutzmaßnahme über eine aus einem magnetisch nicht leitfähigen Material bestehende Korrosionsschutzplatte 32 verfügt, die mit zu der Plattenebene 24 der Polplatteneinheit 23 paralleler Ausdehnungsebene so an den aus den beiden Polplatten 26a, 26b und dem Zwischenelement 28 bestehenden Verbundkörper angesetzt und daran befestigt ist, dass sie die zweite großflächige Außenfläche 25b der Polplatteneinheit 23 bildet. Der Umriss der Korrosionsschutzplatte 32 ist mit dem Umriss der gesamten Polplatteneinheit 23 identisch. Die Fixierung der Korrosionsschutzplatte 32 an den anderen Bestandteilen der Polplatteneinheit 23 resultiert aus einer festen Verbindung an den einander zugewandten Fügeflächen.

Die Korrosionsschutzplatte 32 hat in der Achsrichtung der Hauptachse 10 eine wesentlich geringere Höhe als die Polplatten 26a, 26b und das Zwischenelement 28. Sie kann insbesondere folienartig dünn ausgeführt sein. Das Material der Korrosionsschutzplatte 32 kann aus der gleichen Materialgruppe ausgewählt sein wie das Material des Zwischenelementes 28, wobei es sich durchaus um das gleiche Material wie beim Zwischenelement 28 handeln kann.

Die Korrosionsschutzplatte 32 deckt die Polplatten 26a, 26b und das Zwischenelement 28 zweckmäßigerweise an der der Jochstruktur 14 abgewandten Seite ganzflächig ab.

Die Polplatteneinheit 23 ist an der Arbeitsseite 15 der Jochstruktur 14 platziert, und zwar derart, dass jede ihrer beiden ferromagnetischen Polplatten 26a, 26b mit einem der beiden ebenfalls ferromagnetischen seitlichen Jochkörper 34a, 34b der Jochstruktur 14 in Kontakt steht. Die Polplatteneinheit 23 ist insbesondere mit zu der Hauptachse 10 rechtwinkeliger Plattenebene 24 so an die Jochstruktur 14 angesetzt, dass die erste Polplatte 26a an der Abschlussfläche 18 des ersten seitlichen Jochkörpers 34a anliegt und die zweite Polplatte 26b an der Abschlussfläche 18 des zweiten seitlichen Jochkörpers 34b anliegt. Die mit den Abschlussflächen 18 in Kontakt stehenden Flächenbereiche der Polplatten 26a, 26b sind Teilflächen der ersten großflächigen Außenfläche 25a der Polplatteneinheit 23.

Die derart angeordnete Polplatteneinheit 23 überbrückt den Abstand zwischen den beiden seitlichen Jochkörpern 34a, 34b und flankiert dadurch die Spule 45 in deren der Arbeitsseite 15 zugewandten Bereich ihres Außenumfanges.

Betrachtet man jeweils einen der beiden seitlichen Jochkörper 34a, 34b und die daran anliegende Polplatte 26a, 26b, so ergibt sich jeweils eine L-förmige Struktur.

Zwischen der Polplatteneinheit 23 und der Jochstruktur 14 sind zweckmäßigerweise keine direkten Befestigungsmaßnahmen vorgesehen. Die Polplatteneinheit 23 liegt insbesondere nur lose an den Abschlussflächen 18 an, wobei die Relativposition zwischen der Polplatteneinheit 23 und der Jochstruktur 14 allerdings fixiert ist, indem die Polplatteneinheit 23 mit den Anschlussflächen 18 verspannt ist, woraus eine kraftschlüssige Verbindung resultiert.

Diese kraftschlüssige Verbindung resultiert bevorzugt daraus, dass die mit der Spule 45 bestückte Jochstruktur 14 und die Polplatteneinheit 23 in ein als Antriebsgehäuse 38 bezeichnetes Gehäuse des Ventilantriebes 2 eingesetzt und durch Komponenten des Antriebsgehäuses 38 in der Achsrichtung der Hauptachse 10 miteinander verspannt sind.

In diesem Zusammenhang beinhaltet das Antriebsgehäuse 38 bevorzugt einen rohrförmigen Gehäusehauptteil 42, dessen Längsachse mit der Hauptachse 10 zusammenfällt und der unter Zwischenschaltung der Adapterplattenanordnung 17, 22 mit einer ersten Stirnseite 42a voraus am Sockelkörper 3 montiert ist. Mit Abstand zu der ersten Stirnseite 42a verfügt das Gehäusehauptteil 42 in seinem Innern über einen von der peripheren Wandung nach innen ragenden ringförmigen Anschlagbund 43, auf dem die Polplatteneinheit 23 im äußeren Randbereich mit ihrer zweiten großflächigen Außenfläche 25b aufliegt. Im Bereich der der ersten Stirnseite 42a entgegengesetzten zweiten Stirnseite 42b ist an dem Gehäusehauptteil 42 ein Gehäusedeckel 44 befestigt, insbesondere durch Einpressen, der auf die der Antriebsseite 15 entgegengesetzte Seite der ebenfalls in dem Gehäusehauptteil 42 platzierten Jochstruktur 14 einwirkt und selbige an die sich an dem Anschlagbund 43 abstützende Polplatteneinheit 23 andrückt.

Dadurch, dass der Anschlagbund 43 nur mit dem äußeren Randbereich der zweiten großflächigen Außenfläche 25b der Polplatteneinheit 23 zusammenwirkt, bleibt der übrige, größte Teil der zweiten großflächigen Außenfläche 25b der Polplatteneinheit 23 unabgedeckt. Ihm liegt ein die beiden Polplatten 26a, 26b rechtwinkelig zu der Hauptachse 10 überlappendes, aus einem ferromagnetischen Material bestehendes Ankerelement 46 in der Achsrichtung der Hauptachse 10 gegenüber, das zweckmäßigerweise plattenförmig ausgebildet ist, wobei seine die Hauptausdehnungsebene definierende Plattenfläche zumindest im Wesentlichen und bevorzugt genau parallel zur Plattenebene 24 der Polplatteneinheit 23 verläuft.

Das Ankerelement 46 ist relativ zur Jochstruktur 14 und zur Polplatteneinheit 23 beweglich, wobei die von ihm ausführbare Bewegung als Arbeitsbewegung 47 bezeichnet sei, die in der Zeichnung durch einen Doppelpfeil illustriert ist. Bei Ausführung der Arbeitsbewegung 47 verändert das Ankerelement 46 seinen Abstand zur Polplatteneinheit 23.

Die Arbeitsbewegung 47 des Ankerelementes 46 ist durch entsprechende elektrische Ansteuerung der Spule 45 aufgrund des daraus resultierenden Magnetfeldes hervorrufbar. Durch das bei Bestromung der Spule 45 erzeugbare Magnetfeld wird das Ankerelement 46 an die Polplatteneinheit 23 angezogen, wobei sich ein im deaktivierten Zustand der Spule 45 zwischen dem Ankerelement 46 und jeder Polplatte 26a, 26b der Polplatteneinheit 23 befindlicher Arbeitsluftspalt 48 verringert. Im Extremfall kann das Ankerelement 46 an der Polplatteneinheit 23 zur Anlage gelangen.

Die maximale Spalthöhe des Arbeitsluftspaltes 48 liegt bei deaktivierter Spule 45 vor. Sie wird exemplarisch durch die Ventilfeder 12 hervorgerufen. Die Ventilfeder 12 drückt das Ventilglied 7 ständig in eine von der Polplatteneinheit 23 wegweisende Richtung, was entsprechend für das Ankerelement 46 gilt, das beim Ausführungsbeispiel mit dem Ventilglied 7 durch feste Verbindung bewegungsgekoppelt ist.

Beim Ausführungsbeispiel wird das Ventilglied 7 bei deaktivierter Spule 45 durch die Ventilfeder 12 in eine am Ventilsitz 9 anliegende Schließstellung vorgespannt. Dabei haben die Arbeitsluftspalte 48 ein Maximum. Durch aus der elektrischen Ansteuerung resultierende Bestromung der Spule 45 wird ein Magnetfeld erzeugt, das das Ankerelement 46 im Sinne einer Verringerung der Höhe der Arbeitsluftspalte 48 in Richtung zur Polplatteneinheit zieht und dadurch das Ventilglied 7 in eine vom Ventilsitz 9 abgehobene Offenstellung verlagert.

Bei einem alternativen, nicht illustrierten Ausführungsbeispiel ist das Ventilglied 7 unmittelbar von dem Ankerelement 46 gebildet.

Bei der Arbeitsbewegung 47 des Ankerelementes 46 handelt es sich vorzugsweise um eine quer und insbesondere rechtwinkelig zu der Plattenebene 24 der Polplatteneinheit 23 orientierte, rein translatorische Bewegung.

Das bei der Bestromung der Spule 45 erzeugte Magnetfeld fließt durch den Joch-Verbindungskörper 35, die beiden seitlichen Jochkörper 34a, 34b, die beiden daran anliegenden Polplatten 26a, 26b und - unter Überbrückung und mit der Tendenz zur Verringerung der Arbeitsluftspalte 48 - durch das hierbei eine Zugkraft erfahrende Ankerelement 46.

Aufgrund der großflächigen Überlappung des Ankerelementes 46 und der beiden Polplatten 26a, 26b stellt sich ein hoher magnetischer Fluss ein, aus dem eine hohe Anzugskraft bezüglich des Ankerelementes 46 resultiert.

Das Ankerelement 46 ist beim Ausführungsbeispiel in einer in Achsrichtung der Hauptachse 6 einerseits von der Polplatteneinheit 23 und andererseits von der Adapterplatteneinheit 17, 22 begrenzten Ankeraufnahmekammer 52 angeordnet, deren in Achsrichtung der Hauptachse 10 gemessene Höhe größer ist als die entsprechend gemessene Höhe des Ankerelementes 46, um die Arbeitsbewegung 47 zu ermöglichen.

Bei dem illustrierten Ventilkonzept besteht die Möglichkeit, dass das in die Ventilkammer 6 eintretende Fluid auch in die Ankeraufnahmekammer 52 eintritt. Aufgrund der Korrosionsschutzplatte 32, die der Ankeraufnahmekammer 52 zugewandt ist, wird allerdings ein unmittelbarer Kontakt des Fluides mit dem Material der Polplatteneinheit 23 und insbesondere mit dem Material der beiden Polplatten 26a, 26b verhindert, so dass keine Korrosion auftritt.

Außerdem ist bevorzugt die zwischen dem Zwischenelement 28 und den beiden Polplatten 26a, 26b realisierte feste Verbindung eine fluid- und druckdichte Verbindung, so dass kein Fluidübertritt zur Jochstruktur 14 möglich ist und insbesondere auch dann verhindert wird, wenn die verwendete Polplatteneinheit 23 an der dem Ankerelement 46 zugewandten Seite keine Korrosionsschutzplatte 32 aufweist.

Die Polplatteneinheit 23 ist zweckmäßigerweise ein durch ein Plattierungsverfahren erzeugter Verbundkörper. Die beiden Polplatten 26a, 26b und das Zwischenelement 28 sowie, gegebenenfalls, die Korrosionsschutzplatte 32 sind durch Plattierung zu einer Baueinheit vereinigt, was durch einen Walzvorgang mittels einer entsprechend ausgelegten Walzvorrichtung realisiert wird.

Unabhängig davon, ob die Polplatteneinheit 23 eine Korrosionsschutzplatte 32 aufweist oder nicht, werden in dem Walzvorgang zweckmäßigerweise zunächst nur die beiden Polplatten 26a, 26b und das Zwischenelement 28 plattiert. Soll die Polplatteneinheit 23 auch eine Korrosionsschutzplatte 32 aufweisen, wird diese zweckmäßigerweise erst anschließend auf den aus den beiden Polplatten 26a, 26b und dem Zwischenelement 28 bestehenden Verbundkörper aufgebracht.

Die beim Plattieren zwischen den miteinander in Kontakt stehenden Fügeflächen entstehenden Fügekräfte resultieren aus dem hohen Walzdruck, mit dem die betreffenden Komponenten aneinander angedrückt werden. Die Gefüge der unterschiedlichen Materialien greifen ineinander ein und sorgen für einen festen und unlösbaren Zusammenhalt, so dass der Verbundkörper festigkeitsmäßig annähernd mit einem einstückigen Körper vergleichbar ist.

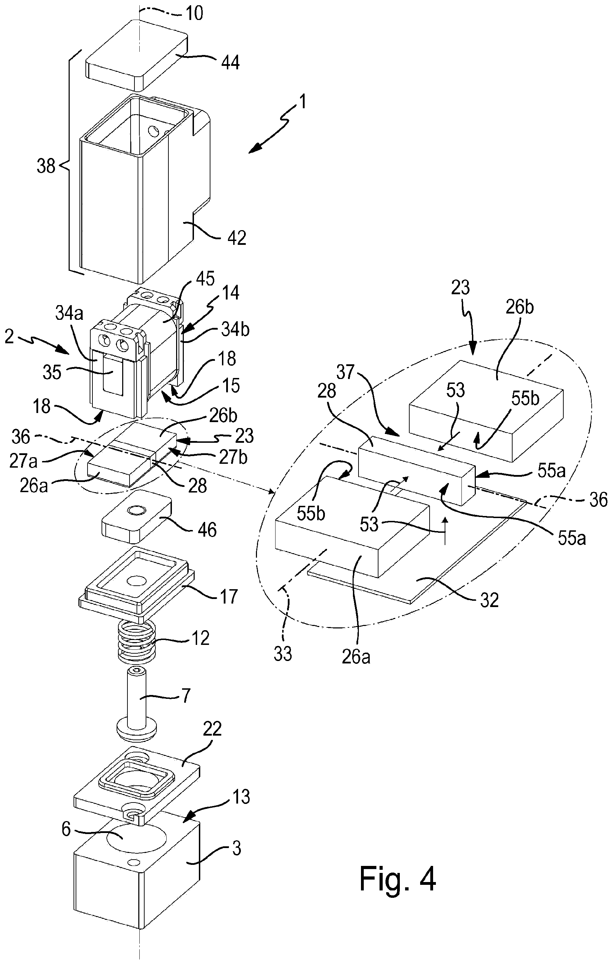

Die Plattierungsvorgänge sind in Figur 4 in dem vergrößerten Ausschnitt durch Pfeile 53 angedeutet. Allerdings findet das Plattieren bevorzugt nicht unter Verwendung von bereits mit dem gewünschten Sollmaß bereitgestellten Komponenten statt, sondern basierend auf aus dem gewünschten Material bestehenden Ausgangsstrangkörpern, die in einem kontinuierlichen Walzvorgang durch den entstehenden Walzdruck miteinander vereinigt werden.

Konkret wird dabei insbesondere auf zwei ferromagnetische Polplatten-Ausgangsstrangkörper und einen magnetisch nicht leitfähigen Zwischenelement-Ausgangsstrangkörper zurückgegriffen, wobei diese drei Ausgangsstrangkörper durch eine Walzvorrichtung hindurchgeleitet werden, in der sie längsseits miteinander verwalzt werden, so dass ein Verbundstrangkörper beliebiger Länge entsteht. Aus diesem Verbundstrangkörper kann dann eine große Anzahl von Polplatteneinheiten 23 durch entsprechendes Ablängen bzw. Zuschneiden oder Ausstanzen hergestellt werden.

Ist ein Korrosionsschutz gewünscht, wird bevorzugt auch noch ein Korrosionsschutzplatten-Ausgangsstrangkörper auf die anderen Ausgangsstrangkörper plattiert, bevor die Vereinzelung durch beispielsweise Ablängen oder Ausstanzen erfolgt. Dies geschieht insbesondere, nachdem zuvor die beiden Polplatten-Ausgangsstrangkörper und der Zwischenelement-Ausgangsstrangkörper zu einem Verbundkörper plattiert wurden.

Bei dem illustrierten Ausführungsbeispiel sind die beiden Polplatten 26a, 26b jeweils einstückig ausgebildet. Alternativ dazu besteht aber auch die Möglichkeit, eine oder beide Polplatten 26a, 26b aus mehreren längsseits aneinander angesetzten und miteinander verbundenen Polplatten-Teilkörpern zu realisieren. Diese Polplatten-Teilkörper werden bevorzugt auch durch Plattierung zu der gewünschten Polplatte 26a, 26b vereinigt. Es besteht die vorteilhafte Möglichkeit, in ein und demselben Plattierungsvorgang sämtliche Polplatten-Teilkörper und das Zwischenelement 28 zu einem zusammenhängenden Verbundkörper zu vereinigen.

Bevorzugt sind die beiden Polplatten 26a, 26b wie auch das Zwischenelement 28 quaderförmig gestaltet. Die einander zugewandten und miteinander verbundenen Fügeflächen 55a, 55b der Polplatten 26a, 26b und des Zwischenelementes 28 haben dabei insbesondere eine Rechteckkontur. Damit verbunden ist der Vorteil, dass das Volumen des ferromagnetischen Materials der Polplatten 26a, 26b relativ groß ist und folglich die Polplatten 26a, 26b einen relativ großen magnetischen Fluss leiten können, was hohe Magnetkräfte ermöglicht.

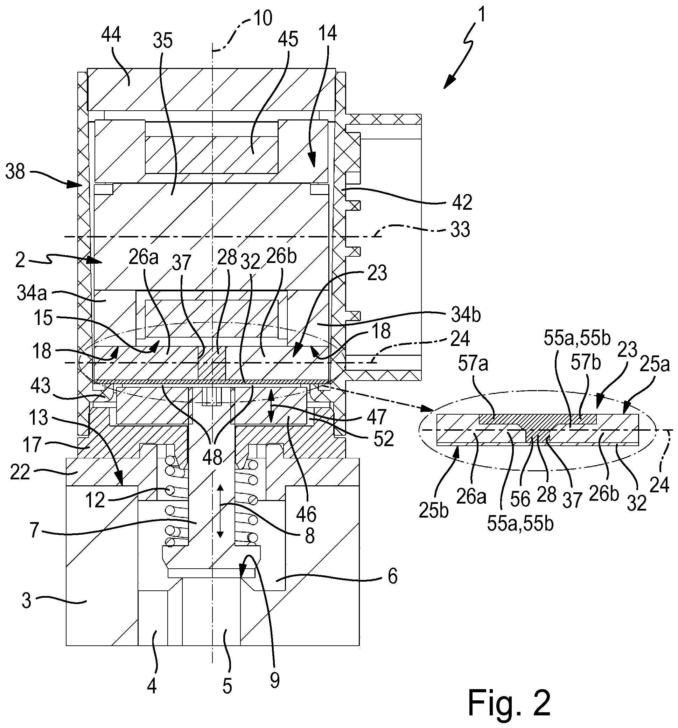

Durch eine Vergrößerung der miteinander in Kontakt stehenden Fügeflächen 55a, 55b lässt sich die Festigkeit der Verbindung zwischen den Komponenten der Polplatteneinheit 23 vergrößern. Eine in diesem Zusammenhang vorteilhafte Ausgestaltung ist in dem separat abgebildeten und strichpunktiert umrahmten Ausschnitt der Figur 2 gezeigt. Hier hat das Zwischenelement 28 einen im Wesentlichen T-förmigen Querschnitt mit einem Zentralabschnitt 56 und zwei von dem Zentralabschnitt 56 in einander entgegengesetzte Richtungen wegragenden, ersten und zweiten Schenkelabschnitten 57a, 57b. Während der Zentralabschnitt 56 zwischen die beiden Polplatten 26a, 26b eingreift und den Zwischenraum 37 ausfüllt, ragen die beiden Schenkelabschnitte 57a, 57b in der Achsrichtung der ersten Querachse 33 in Richtung zu den beiden Polplatten 26a, 26b, die eine zur Außenkontur der Schenkelabschnitte 57a, 57b komplementäre Konturierung haben, so dass die Schenkelabschnitte 57a, 57b flächenbündig in das Material der beiden Polplatten 26a, 26b eingelassen sind.

Durch die T-förmige Profilierung des Zwischenelementes 28 ergibt sich eine Überlappung zwischen dem Zwischenelement 28 und den beiden Polplatten 26a, 26b parallel zu der Plattenebene 24, so dass nicht nur die Fügeflächen 55a, 55b vergrößert werden, sondern auch eine Abstützung erfolgt, die einen erhöhten Widerstand gegen Biegemomente leistet, was unter anderem dann von Vorteil ist, wenn das Ankerelement 46 bei der Arbeitsbewegung 47 auf die Polplatteneinheit 23 aufprallt. Insgesamt betrachtet hat die Polplatteneinheit 23 dabei nach wie vor eine plattenförmige Gestalt.

Die mit dem T-förmigen Zwischenelement 28 ausgestattete Polplatteneinheit 23 ist insbesondere so ausgerichtet, dass die beiden Schenkelabschnitte 57a, 57b von dem Ankerelement 46 abgewandt und der Jochstruktur 14 zugewandt sind. Dadurch wird die dem Ankerelement 46 zugewandte Magnetfeld-Austrittsfläche der Polplatten 26a, 26b nicht verkleinert und es liegt nach wie vor eine großflächige Überlappung der Polplatten 26a, 26b und des Ankerelementes 46 in der zur Hauptachse 10 rechtwinkeligen Ebene vor.

## Patentansprüche

1. Elektromagnetischer Ventilantrieb, mit einer mindestens eine bestrombare Spule (45) tragenden ferromagnetischen Jochstruktur (14), die zwei zueinander beabstandete und magnetisch leitend miteinander verbundene seitliche Jochkörper (34a, 34b) enthält, mit einer den Abstand zwischen den beiden seitlichen Jochkörpern (34a, 34b) überbrückenden, als Baueinheit konzipierten Polplatteneinheit (23), die zwei mit jeweils einem der seitlichen Jochkörper (34a, 34b) magnetisch leitend verbundene, ferromagnetische Polplatten (26a, 26b) umfasst, zwischen denen ein magnetisch nicht leitfähiges Zwischenelement (28) angeordnet ist, und mit einem benachbart zu der Polplatteneinheit (23) angeordneten, die beiden Polplatten (26a, 26b) überlappenden Ankerelement (46), das durch elektrische Ansteuerung der Spule (45) zu einer den Abstand zur Polplatteneinheit (23) verändernden Arbeitsbewegung (47) antreibbar ist, **dadurch gekennzeichnet, dass** die beiden Polplatten (26a, 26b) separat voneinander ausgebildet und beabstandet zueinander angeordnet sind, wobei sie zur Bildung der Polplatteneinheit (23) ohne direkten gegenseitigen Kontakt durch das Zwischenelement fest miteinander verbunden sind.

2. Ventilantrieb nach Anspruch 1, **dadurch gekennzeichnet, dass** die beiden Polplatten (26a, 26b) als bezüglich der Jochstruktur (14) separate Komponenten ausgebildet und jeweils an eine Abschlussfläche (18) eines der seitlichen Jochkörper (34) angesetzt sind, wobei sie zweckmäßigerweise rein kraftschlüssig mit diesen Abschlussflächen verspannt sind.

3. Ventilantrieb nach Anspruch 1 oder 2, **dadurch gekennzeichnet, dass** die ferromagnetische Jochstruktur (14) H-förmig gestaltet ist, wobei die beiden seitlichen Jochkörper (34a, 34b) plattenförmig ausgebildet und durch einen sich zwischen ihnen erstreckenden, die Spule (45) tragenden ferromagnetischen Jochkern der Jochstruktur (14) magnetisch leitend miteinander verbunden sind, wobei die Spule (45) in einem Bereich ihres Außenumfanges von der Polplatteneinheit (23) flankiert ist.

4. Ventilantrieb nach einem der Ansprüche 1 bis 3, **dadurch gekennzeichnet, dass** das Ankerelement (46) plattenförmig ausgebildet ist, wobei sich seine Plattenebene zweckmäßigerweise zumindest im Wesentlichen parallel zur Plattenebene (24) der Polplatteneinheit (23) erstreckt.

5. Ventilantrieb nach einem der Ansprüche 1 bis 4, **dadurch gekennzeichnet, dass** die Arbeitsbewegung (47) des Ankerelementes (46) eine quer zur Plattenebene (24) der Polplatteneinheit (23) orientierte translatorische Bewegung ist, wobei das Ankerelement (46) eine unter Bildung jeweils eines Arbeitsluftspaltes (48) von beiden Polplatten (26a, 26b) vollständig abgehobene Stellung einnehmen kann.

6. Ventilantrieb nach einem der Ansprüche 1 bis 5, **dadurch gekennzeichnet, dass** die feste Verbindung zwischen dem Zwischenelement (28) und jeder der beiden Polplatten (26a, 26b) eine fluiddichte Verbindung ist, derart, dass die Polplatteneinheit (23) insgesamt fluidundurchlässig ist.

7. Ventilantrieb nach einem der Ansprüche 1 bis 6, **dadurch gekennzeichnet, dass** er einen die Jochstruktur (14) tragenden Sockelkörper (3) aufweist, in dem mehrere Fluidkanäle (4, 5) ausgebildet sind, deren Verbindung untereinander mittels eines Ventilgliedes (7) steuerbar ist, das mit dem Ankerelement (46) bewegungsgekoppelt oder unmittelbar von dem Ankerelement (46) gebildet ist.

8. Ventilantrieb nach einem der Ansprüche 1 bis 7, **dadurch gekennzeichnet, dass** die Polplatteneinheit (23) ein durch Plattierung erzeugter Verbundkörper ist, bei dem die beiden Polplatten (26a, 26b) und das Zwischenelement (28) durch Walzen miteinander verbunden sind.

9. Ventilantrieb nach einem der Ansprüche 1 bis 8, **dadurch gekennzeichnet, dass** die beiden Polplatten (26a, 26b) aus ferromagnetischem Stahl bestehen und das Zwischenelement (28) aus einem magnetisch nicht leitfähigen Material besteht, wobei das magnetisch nicht leitfähige Material des Zwischenelementes (28) zweckmäßigerweise ein insbesondere aus der Gruppe Aluminium, Kupfer, Titan, Messing, Bronze und austenitischer Stahl ausgewähltes Metall oder ein Kunststoffmaterial ist.

10. Ventilantrieb nach einem der Ansprüche 1 bis 9, **dadurch gekennzeichnet, dass** die Polplatteneinheit (23) zumindest an ihrer dem Ankerelement (46) zugewandten Plattenfläche (25b) eine die Polplatten (26a, 26b) und das Zwischenelement (28) abdeckende und aus einem magnetisch nicht leitfähigen Material bestehende Korrosionsschutzplatte (32) aufweist, die zweckmäßigerweise durch Plattieren befestigt ist.

11. Ventilantrieb nach einem der Ansprüche 1 bis 10, **dadurch gekennzeichnet, dass** die beiden Polplatten (26a, 26b) jeweils einstückig ausgebildet sind.

12. Ventilantrieb nach einem der Ansprüche 1 bis 11, **dadurch gekennzeichnet, dass** sowohl die beiden Polplatten (26a, 26b) als auch das Zwischenelement (28) der Polplatteneinheit (23) quaderförmig gestaltet sind.

13. Ventilantrieb nach einem der Ansprüche 1 bis 12, **dadurch gekennzeichnet, dass** das Zwischenelement (28) einen im Wesentlichen T-förmigen Querschnitt hat, wobei es einen zwischen die beiden Polplatten (26a, 26b) eingreifenden Zentralabschnitt (56) und zwei von dem Zentralabschnitt (56) in Richtung zu den beiden Polplatten (26a, 26b) wegragende und in das Material der Polplatten (26a, 26b) außen flächenbündig eingelassene Schenkelabschnitte (57a, 57b) aufweist, wobei die Polplatteneinheit (23) zweckmäßigerweise so ausgerichtet ist, dass ihre die beiden Schenkelabschnitte (57a, 57b) des Zwischenelements (28) aufweisende Plattenfläche (25a) von dem Ankerelement (46) abgewandt ist.

14. Verfahren zur Herstellung eines Ventilantriebes nach einem der Ansprüche 1 bis 13, **dadurch gekennzeichnet, dass** die die Polplatteneinheit (23) bildenden Komponenten (26a, 26b, 28, 32) durch Plattieren mittels eines Walzvorganges miteinander verbunden werden.

15. Verfahren nach Anspruch 14, **dadurch gekennzeichnet, dass** die Polplatteneinheit (23) durch Ablängen oder Ausstanzen aus einem Verbundstrangkörper erzeugt wird, der zuvor durch einen kontinuierlichen Plattierungsvorgang, bei dem ferromagnetische Polplatten-Ausgangsstrangkörper und ein magnetisch nicht leitfähiger Zwischenelement-Ausgangsstrangkörper durch Walzen miteinander vereinigt wurden, hergestellt wurde.

16. Magnetventil mit einem elektromagnetischen Ventilantrieb nach einem der Ansprüche 1 bis 14, **dadurch gekennzeichnet, dass** es ein bewegliches Ventilglied (7) aufweist, das mit dem Ankerelement (46) bewegungsgekoppelt oder unmittelbar von dem Ankerelement (46) gebildet ist.

## Claims

1. Electromagnetic valve drive with a ferromagnetic yoke structure (14) carrying at least one coil (45) which may be supplied with electric current and containing two side yoke bodies (34a, 34b), spaced apart from one another and connected to one another in a magnetically conductive manner, with a pole plate unit (23) conceived as an assembly, bridging the space between the two side yoke bodies (34a, 34b) and comprising two ferromagnetic pole plates (26a, 26b), each connected with one of the side yoke bodies (34a, 34b) in a magnetically conductive manner and with a magnetically non-conductive intermediate element (28) arranged between them, and with an armature element (46) arranged adjacent to the pole plate unit (23), overlapping the two pole plates (26a, 26b), and which may be driven by electrical activation of the coil (45) to an operating movement (47) varying the distance to the pole plate unit (23), **characterised in that** the two pole plates (26a, 26b) are separate from one another and arranged with clearance from one another, wherein they are permanently connected to one another through the intermediate element without direct mutual contact to form the pole plate unit (23).

2. Valve drive according to claim 1, **characterised in that** the two pole plates (26a, 26b) are designed as separate components relative to the yoke structure (14) and are each attached to an end surface (18) of one of the side yoke bodies (34), wherein they are expediently tensioned purely by force-fit against these end surfaces.

3. Valve drive according to claim 1 or 2, **characterised in that** the ferromagnetic yoke structure (14) is H-shaped, wherein the two side yoke bodies (34a, 34b) are plate-shaped and connected to one another, with magnetic conductivity, by a ferromagnetic yoke core of the yoke structure (14) which extends between them and carries the coil (45), wherein the coil (45) is flanked by the pole plate unit (23) in an area of its outer periphery.

4. Valve drive according to any of claims 1 to 3, **characterised in that** the armature element (46) is plate-shaped in form, wherein its plate plane extends expediently at least substantially parallel to the plate plane (24) of the pole plate unit (23).

5. Valve drive according to any of claims 1 to 4, **characterised in that** the operating movement (47) of the armature element (46) is a translational movement aligned transversely to the plate plane (24) of the pole plate unit (23), wherein the armature element (46) is able to assume a completely raised position, forming in each case an operating air gap (48) between both pole plates (26a, 26b).

6. Valve drive according to any of claims 1 to 5, **characterised in that** the permanent connection between the intermediate element (28) and each of the two pole plates (26a, 26b) is a fluid-tight connection, such that the pole plate unit (23) is altogether impermeable to fluid.

7. Valve drive according to any of claims 1 to 6, **characterised in that** it has a base body (3) supporting the yoke structure (14) and in which are formed several fluid passages (4, 5), their connection with one another being controllable by means of a valve member (7) which is movement-coupled to the armature element (46) or formed directly by the armature element (46).

8. Valve drive according to any of claims 1 to 7, **characterised in that** the pole plate unit (23) is a composite body created by plating, in which the two pole plates (26a, 26b) and the intermediate element (28) are joined together by rolling.

9. Valve drive according to any of claims 1 to 8, **characterised in that** the two pole plates (26a, 26b) are made of ferromagnetic steel, and the intermediate element (28) is made of a magnetically non-conductive material, wherein the magnetically non-conductive material of the intermediate element (28) is a metal selected in particular from the group of aluminium, copper, titanium, brass, bronze and austenitic steel or a plastic material.

10. Valve drive according to any of claims 1 to 9, **characterised in that** the pole plate unit (23) has, at least on its plate surface (25b) facing the armature element (46), an anti-corrosion plate (32) covering the pole plates (26a, 26b) and the intermediate element (28) and made of a magnetically non-conductive material, and expediently attached by plating.

11. Valve drive according to any of claims 1 to 10, **characterised in that** the two pole plates (26a, 26b) are each made in one piece.

12. Valve drive according to any of claims 1 to 11, **characterised in that** not only the two pole plates (26a, 26b) but also the intermediate element (28) of the pole plate unit (23) are cuboid in shape.

13. Valve drive according to any of claims 1 to 12, **characterised in that** the intermediate element (28) has a substantially T-shaped cross-section, wherein it has a central section (56) engaging between the two pole plates (26a, 26b) and two leg sections (57a, 57b) extending away from the central section (56) towards the two pole plates (26a, 26b) and let into the material of the pole plates (26a, 26b), flush on the outside, wherein the pole plate unit (23) is expediently so aligned that its plate surface (25a) with the two leg sections (57a, 57b) of the intermediate element (28) faces away from the armature element (46).

14. Method of producing a valve drive according to any of claims 1 to 13, **characterised in that** the components (26a, 26b, 28, 32) forming the pole plate unit (23) are joined together by plating by means of a rolling process.

15. Method according to claim 14, **characterised in that** the pole plate unit (23) is produced by cutting to length or punching out of a composite continuous body which has been produced beforehand by means of a continuous plating process in which ferromagnetic pole plate initial continuous bodies and a magnetically non-conductive intermediate element initial continuous body have been combined by rolling.

16. Solenoid valve with an electromagnetic valve drive according to any of claims 1 to 14, **characterised in that** it has a movable valve member (7) which is movement-coupled to the armature element (46) or is formed directly by the armature element (46).

## Revendications

1. Entraînement de vanne électromagnétique, avec une structure de culasse (14) ferromagnétique, supportant au moins une bobine (45) pouvant être alimentée en courant, qui contient deux corps de culasse latéraux (34a, 34b) espacés l'un de l'autre et reliés l'un à l'autre de manière conductrice magnétiquement, avec une unité à plaques polaires (23), enjambant la distance entre les deux corps de culasse latéraux (34a, 34b), conçue en tant qu'unité modulaire, qui comprend deux plaques polaires (26a, 26b) ferromagnétiques, reliées de manière conductrice magnétiquement à respectivement un des corps de culasse latéraux (34a, 34b), entre lesquelles un élément intermédiaire (28) non conducteur magnétiquement est disposé, et avec un élément d'ancrage (46) disposé de manière adjacente à l'unité à plaques polaires (23), chevauchant les deux plaques polaires (26a, 26b), qui peut être entraîné par un pilotage électrique de la bobine (45) aux fins d'un déplacement de travail (47) modifiant la distance par rapport à l'unité à plaques polaires (23), **caractérisé en ce que** les deux plaques polaires (26a, 26b) sont réalisées de manière séparée l'une de l'autre et sont disposées de manière espacée l'une de l'autre, dans lequel elles sont reliées l'une à l'autre de manière solidaire pour former l'unité à plaques polaires (23) sans contact direct mutuel par l'élément intermédiaire.

2. Entraînement de vanne selon la revendication 1, **caractérisé en ce que** les deux plaques polaires (26a, 26b) sont réalisées en tant que composants séparés par rapport à la structure de culasse (14) et sont placées respectivement au niveau d'une surface terminale (18) d'un des corps de culasse (34) latéraux, dans lequel de manière opportune elles sont assemblées par serrage purement à force auxdites surfaces terminales.

3. Entraînement de vanne selon la revendication 1 ou 2, **caractérisé en ce que** la structure de culasse (14) ferromagnétique est configurée en forme de H, dans lequel les deux corps de culasse latéraux (34a, 34b) sont réalisés de manière à présenter une forme de plaque et sont reliés l'un à l'autre de manière conductrice magnétiquement par un noyau de culasse ferromagnétique de la structure de culasse (14) s'étendant entre eux, supportant la bobine (45), dans lequel la bobine (45) est flanquée dans une zone de sa périphérie extérieure de l'unité à plaques polaires (23).

4. Entraînement de vanne selon l'une quelconque des revendications 1 à 3, **caractérisé en ce que** l'élément d'ancrage (46) est réalisé de manière à présenter une forme de plaque, dans lequel son plan de plaque s'étend de manière opportune au moins sensiblement de manière parallèle au plan de plaque (24) de l'unité à plaques polaires (23).

5. Entraînement de vanne selon l'une quelconque des revendications 1 à 4, **caractérisé en ce que** le déplacement de travail (47) de l'élément d'ancrage (46) est un déplacement par translation orienté de manière transversale au plan de plaque (24) de l'unité à plaques polaires (23), dans lequel l'élément d'ancrage (46) peut adopter une position complètement relevée par rapport aux deux plaques polaires (26a, 26b) en formant respectivement un entrefer de travail (48).

6. Entraînement de vanne selon l'une quelconque des revendications 1 à 5, **caractérisé en ce que** la liaison solidaire entre l'élément intermédiaire (28) et chacune des deux plaques polaires (26a, 26b) est une liaison étanche aux fluides, de telle manière que l'unité à plaques polaires (23) est globalement imperméable aux fluides.

7. Entraînement de vanne selon l'une quelconque des revendications 1 à 6, **caractérisé en ce qu'**il présente un corps de socle (3) supportant la structure de culasse (14), dans lequel sont réalisés plusieurs canaux de fluide (4, 5), dont la liaison peut être commandée les uns entre les autres au moyen d'un organe de vanne (7), qui est couplé en déplacement avec l'élément d'ancrage (46) ou est formé directement par l'élément d'ancrage (46).

8. Entraînement de vanne selon l'une quelconque des revendications 1 à 7, **caractérisé en ce que** l'unité à plaques polaires (23) est un corps composite généré par placage, où les deux plaques polaires (26a, 26b) et l'élément intermédiaire (28) sont reliés les uns aux autres par laminage.

9. Entraînement de vanne selon l'une quelconque des revendications 1 à 8, **caractérisé en ce que** les deux plaques polaires (26a, 26b) sont constituées d'un acier ferromagnétique et l'élément intermédiaire (28) est constitué d'un matériau non conducteur magnétiquement, dans lequel le matériau non conducteur magnétiquement de l'élément intermédiaire (28) est de manière opportune un métal choisi en particulier parmi le groupe aluminium, cuivre, titane, laiton, bronze et acier austénitique ou une matière synthétique.

10. Entraînement de vanne selon l'une quelconque des revendications 1 à 9, **caractérisé en ce que** l'unité à plaques polaires (23) présente au moins au niveau de sa surface de plaque (25b) tournée vers l'élément d'ancrage (46) une plaque de protection anti-corrosion (32), recouvrant les plaques polaires (26a, 26b) et l'élément intermédiaire (28) et constituée d'un matériau non conducteur magnétiquement, laquelle est fixée de manière opportune par placage.

11. Entraînement de vanne selon l'une quelconque des revendications 1 à 10, **caractérisé en ce que** les deux plaques polaires (26a, 26b) sont réalisées respectivement d'un seul tenant.

12. Entraînement de vanne selon l'une quelconque des revendications 1 à 11, **caractérisé en ce qu'**aussi bien les deux plaques polaires (26a, 26b) que l'élément intermédiaire (28) de l'unité à plaques polaires (23) sont configurés de manière à présenter une forme carrée.

13. Entraînement de vanne selon l'une quelconque des revendications 1 à 12, **caractérisé en ce que** l'élément intermédiaire (28) a une section transversale sensiblement en forme de T, dans lequel il présente une section centrale (56) de prise entre les deux plaques polaires (26a, 26b) et deux sections de branche (57a, 57b) dépassant de la section centrale (56) en direction des deux plaques polaires (26a, 26b) et pratiquées en affleurement de surface côté extérieur dans le matériau des plaques polaires (26a, 26b), dans lequel l'unité à plaques polaires (23) est orientée de manière opportune de telle sorte que sa surface de plaque (25a) présentant les deux sections de branche (57a, 57b) de l'élément intermédiaire (28) est opposée à l'élément d'ancrage (46).

14. Procédé servant à fabriquer un entraînement de vanne selon l'une quelconque des revendications 1 à 13, **caractérisé en ce que** les composants (26a, 26b, 28, 32) formant l'unité à plaques polaires (23) sont reliés les uns aux autres par placage au moyen d'une opération de laminage.

15. Procédé selon la revendication 14, **caractérisé en ce que** l'unité à plaques polaires (23) est produite par découpage à la bonne longueur ou par découpage par estampage à partir d'un corps d'extrusion composite, qui a été fabriqué au préalable par une opération de placage continue, où des corps d'extrusion de départ de plaque polaire ferromagnétiques et un corps d'extrusion de départ d'élément intermédiaire non conducteur magnétiquement sont regroupés les uns aux autres par laminage.

16. Electrovanne avec un entraînement de vanne électromagnétique selon l'une quelconque des revendications 1 à 14, **caractérisée en ce qu'**elle présente un organe de vanne (7) mobile, qui est couplé en déplacement avec l'élément d'ancrage (46) ou qui est formé directement par l'élément d'ancrage (46).
